**Europäisches Patentamt**

**European Patent Office**

**Office européen des brevets**

(11) Veröffentlichungsnummer: **0 003 536**
A2

(12) **EUROPÄISCHE PATENTANMELDUNG**

(21) Anmeldenummer: 79100229.8

(51) Int. Cl.²: **C 08 J 5/18,** B 05 D 5/00

(22) Anmeldetag: 26.01.79

(30) Priorität: 03.02.78 DE 7803104 U

(71) Anmelder: HOECHST AKTIENGESELLSCHAFT, Zentrale Patentabteilung Postfach 80 03 20, D-6230 Frankfurt/Main 80 (DE)

(43) Veröffentlichungstag der Anmeldung: 22.08.79 Patentblatt 79/17

(72) Erfinder: Brillowski, Hubert, D-8261 Maierhof 77 Post Hirten (DE)

(84) Benannte Vertragsstaaten: CH DE FR NL SE

(54) **Folienlaminat mit metallischem Aussehen.**

㊞ Bei einem Folienlaminat aus einer thermoplastischen Kunststoffolie und einer Schicht aus einem filmbildenden Polymeren und Metallteilchen wird ein metallfarbiges Aussehen des Laminates von hoher Brillanz dann erreicht, wenn die Metallteilchen die Form von Plättchen mit einer Dicke von etwa 1 μm und einer Ausdehnung von etwa 10 bis 50 μm besitzen, die Plättchen im wesentlichen parallel zur Oberfläche der Kunststoffolie liegen und die Schicht auf der Trägerfolie eine Dicke mit einem Flächengewicht von 1 bis 20 Gramm pro Quadratmeter hat, wobei die Gewichtsmenge an Metallteilchen in der Schicht, bezogen auf die Gewichtsmenge an filmbildenden Polymeren, 30 bis 90 Gew.-% beträgt.

- 1 -

HOECHST AKTIENGESELLSCHAFT   HOE 78/F 904        Dr.GL/ei


Folienlaminat mit metallischem Aussehen

Die Erfindung betrifft ein Folienlaminat mit metallischem
Aussehen, bestehend aus einer thermoplastischen Kunststofffolie und aus einer Schicht aus einem filmbildenden Polymeren und Metallteilchen.

Es ist bekannt, Folien aus thermoplastischen Kunststoffen zu
metallisieren, indem man ein- oder beidseitig eine Schicht
aus einem Bindemittel und Metallpulver aufbringt (DE-OS
14 44 308, 16 68 510 und 19 26 520) oder mit einer Metallfolie beschichtet (vgl. DE-OS 19 44 662). Ein solches Folienlaminat weist ein metallisches Aussehen von relativ
hohem Glanz auf. Es besitzt auch relativ hohe Festigkeits-
und Steifigkeitswerte und ist insbesondere licht- und witterungsbeständig. Von Nachteil ist jedoch, daß es wegen der
mangelnden Thermoplastizität der Metallschicht nicht thermoverformbar, beispielsweise tiefziehbar ist. Auch läßt
die Stärke der Haftung der Metallschicht auf der Trägerfolie zu wünschen übrig.

Ferner sind Folien bekannt, die im wesentlichen aus einem
thermoplastischen Kunststoff und Metallpulver bestehen,
und aufgrund des im Kunststoff inkorporierten Metallpulvers

0003536

- 2 -

entsprechend metallfarbig aussehen (vgl. deutsche Auslegeschrift 16 29 298). Solche Folien sind im allgemeinen zwar
gut heißverformbar, nachteilig ist jedoch, daß die erforderliche Menge an Metallpulver relativ hoch ist und sich
dies ungünstig auf die mechanischen Eigenschaften der Folie
auswirkt. Darüberhinaus hat das metallische Aussehen dieser
Folien im allgemeinen nicht diese gewünschte Brillanz.

Aufgabe der Erfindung ist es demnach, ein Kunststoff-Flächengebilde mit metallischem Aussehen von hoher Brillanz vorzuschlagen, das ohne Verlust des metallischen Aussehens heißformbar ist und das die von Kunststoffolien üblicherweise
erwarteten mechanischen Eigenschaften aufweist.

Diese Aufgabe wird erfindungsgemäß gelöst durch ein Folienlaminat mit metallischem Aussehen, bestehend aus einer thermoplastischen Kunststoffolie und aus einer Schicht aus einem
filmbildenden Polymeren und Metallteilchen, gekennzeichnet
durch die Kombination der folgenden Merkmale:

a) die Metallteilchen sind plättchenförmig,
b) die Plättchen sind im wesentlichen parallel zur Oberfläche der Kunststoffolie angeordnet,
c) die Plättchen weisen eine Dicke von etwa 1 µm und eine
   Ausdehnung von etwa 10 bis 50 µm auf,
d) die Gewichtsmenge an Metallteilchen in der Schicht, bezogen auf die Gewichtsmenge an filmbildendem Polymeren,
   beträgt 30 bis 90 Gew.-% und
e) die Schicht hat eine Dicke mit einem Flächengewicht von
   1 bis 20 Gramm pro Quadratmeter.

Die erfindungsgemäße Schicht enthält Metallteilchen (Metallpulver, Metallschliff) in einer Menge von 30 bis 90 Gew.-%,
vorzugsweise 50 bis 80 Gew.-%, insbesondere 60 bis 70 Gew.-%,
bezogen auf das filmbildende Polymere.
Die Schicht weist eine gleichmäßige Dicke mit einem Flächengewicht von etwa 1 bis 20 g/m², vorzugsweise mit 5 bis 10
g/m² auf.

- 3 -

Die Metallteilchen sind flächenförmig (plättchenförmig) und liegen im wesentlichen parallel zur Oberfläche der Kunststoffolie. Die Plättchen besitzen eine Dicke von etwa 1 μm und eine Ausdehnung nach Länge und Breite von je 10 bis 50 μm. Die Gestalt der Plättchen kann geometrischen Formen, beispielsweise dem Quadrat, Rechteck, Trapez und dergleichen, oder beliebig anderen Flächenformen entsprechen. Die Art des Metalles ist nicht kritisch und richtet sich nach dem gewünschten metallischen Farbeffekt. Vorzugsweise werden Metallteilchen (Metallpulver, Metallschliffe) aus Aluminium, Kupfer oder Gold sowie aus Legierungen dieser Metalle untereinander oder mit anderen Metallen, beispielsweise Goldbronze, eingesetzt.

Die metallisch aussehende Schicht des erfindungsgemäßen Folienlaminates kann auch noch mehr oder weniger große Mengen, vorzugsweise im Bereich von 0,1 bis 10 Gew,-%, bezogen auf das filmbildende Polymere, an zweckmäßigen Zusatzstoffen enthalten, beispielsweise Pigmente wie Titandioxid, Siliciumdioxid und Ruß, Füllstoffe wie Kreide, Glasfasern und Asbest, und/oder Farbstoffe.

Das filmbildende Polymere besteht vorzugsweise aus einem Vinylchlorid-Vinylacetat-Copolymeren, Vinylidenchlorid-Polymeren, Vinylidenchlorid-Copolymeren mit mindestens 40 Gew.-% Vinylidenchlorid, Acrylsäureester- und Methacrylsäureester-Polymeren oder Copolymeren davon, oder aus Mischungen dieser Polymeren.

Die Kunststoffolie (Trägerfolie) kann grundsätzlich aus einem beliebigen thermoplastischen Kunststoff gebildet sein. Vorzugsweise besteht sie aus Homo-, Co- und Pfropfcopolymerisaten des Vinylchlorids oder aus Mischungen dieser Polymerisate untereinander oder mit anderen nicht Vinylchlorid enthaltenden thermoplastischen Kunststoffen, in weicher oder harter, vorzugsweise in harter Einstellung. Besonders bevorzugt sind Hart-Folien aus Vinylchlorid-Polymerisaten. Die

- 4 -

Dicke der Trägerfolie beträgt in der Regel 100 bis 1000 µm, vorzugsweise 250 bis 800 µm.

Das Aufbringen der gemäß Erfindung vorgeschlagenen Schicht auf die Trägerfolie kann nach irgendeinem der bekannten Beschichtungsverfahren für thermoplastische Kunststoffolien erfolgen. Danach werden im allgemeinen die einzelnen Komponenten der Schicht zunächst vermischt und in der Regel unter Verwendung einer Flüssigkeit, beispielsweise Chloroform, Tetrachloräthylen, Toluol, Xylol, Essigsäureester, Ketone und dergleichen, aufgetragen. Das Aufbringen erfolgt im allgemeinen mittels einer Druckwalze, mit einer Rakel, durch Aufsprühen oder nach der Methode der Gießfilm-Beschichtung, wobei die Stärke der Schicht nach Wunsch eingestellt wird.

Das erfindungsgemäße Folienlaminat, das ein- oder beidseitig beschichtet ist, zeigt ein metallisches Aussehen mit hoher Brillanz und ist ohne dessen Verlust heißformbar, beispielsweise tiefziehbar. Das Folienlaminat zeichnet sich auch dadurch aus, daß die Schicht aus dem filmbildenden Polymeren und Metall sehr fest auf der Trägerfolie haftet. Darüberhinaus sind die vorteilhaften mechanischen Eigenschaften der thermoplastischen Kunststoffolie, die die Trägerfolie darstellt, durch die aufgebrachte Schicht nicht verändert, so daß auch das Folienlaminat diese vorteilhaften Eigenschaften aufweist.

Das erfindungsgemäße Folienlaminat kann für verschiedene Zwecke verwendet werden. Es ist besonders geeignet als Dekorationsmittel und als Isoliermittel gegen Kälte und Hitze. Wenn es zur Umkleidung von Rohren oder dergleichen benützt wird, besteht die thermoplastische Kunststoffolie des Folienlaminates vorzugsweise aus einer Polyvinylchlorid-Hart-Folie, die eine permanente Rolltendenz besitzt.

Patentansprüche:

1. Folienlaminat mit metallischem Aussehen, bestehend aus einer thermoplastischen Kunststoffolie und aus einer Schicht aus einem filmbildenden Polymeren und Metallteilchen, gekennzeichnet durch die Kombination der folgenden Merkmale:
   a) die Metallteilchen sind plättchenförmig,
   b) die Plättchen sind im wesentlichen parallel zur Oberfläche der Kunststoffolie angeordnet,
   c) die Plättchen weisen eine Dicke von etwa 1 µm und eine Ausdehnung von etwa 10 bis 50 µm auf,
   d) die Gewichtsmenge an Metallteilchen in der Schicht, bezogen auf die Gewichtsmenge an filmbildendem Polymeren, beträgt 30 bis 90 Gew.-%, und
   e) die Schicht hat eine Dicke mit einem Flächengewicht von 1 bis 20 Gramm pro Quadratmeter.

2. Folienlaminat nach Anspruch 1, dadurch gekennzeichnet, daß die Gewichtsmenge an Metallteilchen 50 bis 80 Gew.-%, bezogen auf die Gewichtsmenge an filmbildendem Polymeren, beträgt.

3. Folienlaminat nach Anspruch 1, dadurch gekennzeichnet, daß die Metallteilchen aus Aluminium, Kupfer, Gold oder aus Legierungen dieser Metalle untereinander oder mit anderen Metallen bestehen.

4. Folienlaminat nach Anspruch 1 bis 3, dadurch gekennzeichnat, daß das filmbildende Polymere aus einem Vinylchlorid-Vinylacetat-Polymerisat, Vinylidenchlorid-Polymerisat, Vinylidenchlorid-Copolymerisat mit mindestens 40 Gew.-% Vinylidenchlorid, Polyalkylacrylat, Polyalkylmethacrylat oder aus Mischungen dieser Polymerisate besteht.

5.  Folienlaminat nach Anspruch 1 bis 4, dadurch gekennzeichnet, daß die thermoplastische Kunststoffolie eine
Polyvinylchlorid-Hart-Folie ist.

6.  Folienlaminat nach Anspruch 5, dadurch gekennzeichnet,
daß die Polyvinylchlorid-Hart-Folie eine Folie mit
einer permanenten Rolltendenz ist.